# EUROPEAN PATENT SPECIFICATION

(11) **EP 2 022 821 B1**
(45) Date of publication and mention of the grant of the patent: **25.04.2012**
(21) Application number: 07744011.3
(22) Date of filing: 24.05.2007
(51) Int. Cl.: C08K 7/00, C08L 101/00

(54) **GRANULATED FLAKY TITANIC ACID SALTS, PROCESS FOR PRODUCTION THEREOF, RESIN COMPOSITIONS CONTAINING THE SALTS**
GRANULIERTE PLÄTTCHENFÖRMIGE TITANSÄURESALZE, HERSTELLUNGSVERFAHREN DAFÜR, DIE SALZE ENTHALTENDE HARZZUSAMMENSETZUNGEN
SELS D'ACIDE TITANIQUE EN PAILLETTES GRANULÉS, LEUR PROCÉDÉ DE PRODUCTION, COMPOSITIONS DE RÉSINE LES CONTENANT

(30) Priority: 30.05.2006 JP 2006150571
(43) Date of publication of application: 11.02.2009
(73) Proprietor: Otsuka Chemical Co., Ltd., Osaka-shi, Osaka 540-0021 (JP)
(72) Inventor: YAMAMOTO, Minoru, Tokushima-shi, Tokushima 771-0193 (JP)
(74) Representative: Merkle, Gebhard
(86) International application number: PCT/JP2007/060577
(87) International publication number: WO 2007/138967

(56) References cited:
- EP-A1- 1 033 347
- EP-A1- 1 195 356
- EP-A1- 1 329 421
- WO-A1-02/10069
- WO-A1-99/11574
- WO-A1-03/037797
- WO-A1-2005/068558
- JP-A- 06 144 999
- JP-A- 2001 253 770
- JP-A- 2002 220 549
- JP-B1- 3 062 497
- JP-B1- 3 102 789

## Description

### TECHNICAL FIELD

The present invention relates to granular platy titanate, a process for producing the same and a resin composition containing the granular platy titanate.

### BACKGROUND ART

On the occasion of the use of fibrous chemical products such as whisker, organic fiber and inorganic fiber, the problem has conventionally been that the deterioration of working environment due to raising dust, the deterioration of transportability and by extension workability due to the lowness of bulk specific gravity, and the deterioration of uniform dispersibility in resin matrix due to the occurrence of consolidation by loading during storage. In particular, the deterioration of uniform dispersibility in resin matrix is an important problem by reason of remarkably deteriorating the performance of an obtained compound.

In order to solve the above-mentioned problem, for example, it is disclosed that the above-mentioned problem is solved by granulating with the use of a composition containing a surface-active agent and/or a binder as an effective component (refer to Patent Document 1). According to the above-mentioned Patent Document 1, it is found out that the dispersibility of obtained granules in resin matrix becomes very favorable.

Also, it is disclosed that the above-mentioned problem is solved by blending 40 to 97 % by weight of crystalline thermoplastic resin with 3 to 60 % by weight of granular potassium titanate having a bulk specific gravity of 0.20 to 0.80 g/cm³ (refer to Patent Document 2). According to the above-mentioned Patent Document 2, it is found out that a resin composition exhibiting excellent physical properties is obtained without problems such as bridge and plugging during kneading.

However, in the case of blending and molding a resin composition with fibrous materials, the problem is molding anisotropy characteristic of the fibrous materials.

On the other hand, a platy or scaly titanate compound having no fibrous shape, such as the above-mentioned potassium titanate fiber, is proposed (refer to Patent Documents 3 and 4). According to the above-mentioned Patent Documents, compound with no possibility of blocking up a feed passage in a producing process and no occurrence of the deterioration of labor environment due to inhalant fiber is found out.

EP 1 033 347 A1 relates to fine hollow powder with a titanium oxide shell, obtained by spray drying an exfoliated titania sol, and thin flaky titanium oxide powder obtained by pulverizing the fine hollow powder, and also to processes for producing the same.

EP 1 705 225 A1 discloses a flame-retardant, characterized in that it comprises a layered titanic acid in the form of a nano sheet which is formed by a method comprising treating a layered titanic acid salt with an acid or warm water and then reacting the resultant mixture with an organic basic compound, or carrying out the step of treating a layered titanic acid salt with an acid or warm water and the step of reacting with an organic basic compound, in one pot, to thereby swell or separate the layers; and a flame-retardant resin composition, characterized in that it comprises 100 parts by weight of a resin and 0.5 to 50 parts by weight of the above layered titanic acid in the form of a nano sheet.

EP 1 195 356 A1 relates to a composite plate-like metal titanate having a composition expressed in MO - TiO₂ (wherein M denotes a divalent metal) in which a surface of crystalline metal titanate is partially or entirely coated with amorphous and/or crystalline TiO₂.

Still, a filler has been desired for improving production environment by reducing bridge and plugging more during kneading.
Patent Document 1: Japanese Patent Laid-Open No. 6-144999
Patent Document 2: Japanese Patent Laid-Open No. 5-125218
Patent Document 3: WO 02/010069
Patent Document 4: WO 03/037797
Patent Document 5: WO 99/11574
Patent Document 6: Japanese Patent Publication No. 3062497
Patent Document 7: Japanese Patent Publication No. 3102789
Patent Document 8: Japanese Patent Laid-Open No. 2001-253770

### DISCLOSURE OF THE INVENTION

The object of the present invention is to provide granular platy titanate for improving production environment by reducing bridge and plugging during kneading, a process for producing the same and a resin composition containing the granular platy titanate.

The present invention is a granular platy titanate consisting of a platy titanate and a silane coupling agent.

Platy titanates used in the present invention can be used without particular limitation. Examples thereof include laminar titanate compounds, platy potassium octatitanates and platy composite metal titanates.

Examples of laminar titanate compounds include a laminar titanate compound (A) and a laminar titanate compound (B) obtained by acid treating and thereafter firing the laminar titanate compound (A).

Examples of laminar titanate compounds (A) include a laminar titanate compound represented by the formula (1).

AₓMy□Ti₂-(_{y+z}) O₄ (1)

wherein, A and M each denote different metals of monovalence to trivalence, and □ denotes a defect cite of Ti and wherein x is a positive real number satisfying 0<x<1.0, y and z are each 0 or positive real numbers satisfying 0<y+z<1.0.
A in the above-mentioned formula (1) is a metal with a valence number of monovalence to trivalence, preferably at least one selected from K, Rb and Cs. M therein is a metal with a valence number of monovalence to trivalence, which is different from the metal A, preferably at least one selected from Li, Mg, Zn, Cu, Fe, Al, Ga, Mn and Ni.

Specific examples thereof include K_{0.80}Li_{0.2}Ti_{1.73}O₄, Rb_{0.75}Ti_{1.75}Li_{0.25}O₄, Cs_{0.70}Li_{0.23}Ti_{1.77}O₄, Ce_{0.70}□_{0.18}Ti_{1.83}O₄, Ce_{0.70}Mg_{0.35}Ti_{1.65}O₄, K_{0.8}Mg_{0.4}Ti_{1.6}O₄, K_{0.8}Ni_{0.4}Ti_{1.6}O₄, K_{0.8}Zn_{0.4}Ti_{1.6}O₄, K_{0.8}CU_{0.4}Ti_{1.6}O₄, K_{0.8}Fe_{0.8}Ti_{1.2}O₄, K_{0.8}Mn_{0.8}Ti₁.₂O₄, K_{0.76}Li_{0.22}Mg_{0.05}Ti_{1.73}O₄ and K_{0.67}Li_{0.2}Al_{0.07}Ti_{1.73}O₄.

Lithium potassium titanate K_{0.80}Li_{0.27}Ti_{1.73}O₄ and magnesium potassium titanate K_{0.8}Mg_{0.4}Ti_{1.6}O₄ are particularly preferable.

A method of producing laminar titanate is such as to obtain by mixing and triturating potassium carbonate, lithium carbonate and titanium dioxide at K/Li/Ti = 3/1/6.5 (molar ratio) to fire at a temperature of 800°C, in accordance with the method disclosed in Patent Document 5.

Also, a method of producing is such as to obtain by making alkali metal, or halide or sulfate thereof into flux to fire a mixture mixed so that the weight ratio of flux/raw material is 0.1 to 2.0 at a temperature of 700 to 1200°C, in accordance with the method disclosed in Patent Document 6.

Examples of laminar titanate compounds (B) obtained by acidizing and thereafter firing the laminar titanate compound (A) include T_{0.5 to 0.7}Li_{0.27}Ti_{1.73}O_{3.85 to 3.95} or K_{0.2 to 0.7}Mg_{0.4}Ti_{1.6}O_{3.7 to 4}.

A method of producing a laminar titanate compound obtained by acid treating and thereafter firing the laminar titanic acid compound is such as to obtain by adding an acid to an aqueous slurry of lithium potassium titanate K_{0.80}Li_{0.27}Ti_{1.73}O₄ or magnesium potassium titanate K_{0.8}Mg₀.₄Ti₁.₆O₄ and adjusting the pH of the slurry to 6 to 8, preferably 6.5 to 7.5, to thereafter separate solid content from the slurry and fire at a temperature of approximately 400 to 700°C, in accordance with the method disclosed in Patent Documents 3 and 4.

Examples of platy potassium octatitanate include K₂Ti₈O₁₆ and K_{1.88 to 2}.₁₃Mg_{0.4}Ti₈O_{16.94 to 17.07}.

A method of producing platy potassium octatitanate is such as to obtain by acidizing lithium potassium titanate or magnesium potassium titanate into platy titanic acid, which is immersed in potassium hydroxide solution and thereafter fired at a temperature of 400 to 650°C, in accordance with the method disclosed in Patent Document 7.

Examples of platy composite metal titanate include platy composite metal titanate such that a part or the whole of the surface of metal titanate crystal having composition represented by MO·TiO₂ (In the formula, M denotes divalent metal.) is covered with noncrystalline and/or crystalline TiO₂.

With regard to divalent metal, alkaline earth metal is preferable and calcium is more preferable.

A method of producing platy composite metal titanate is such as to obtain by mixing a platy titanium oxide compound with a metallic compound of one kind or two kinds or more selected from the group consisting of oxide, hydroxide, inorganic acid salt and organic acid salt of the metallic element M at a molar ratio of Ti>M to fire at a temperature of 500 to 1400°C, in accordance with the method disclosed in Patent Document 8.

The binder of a composition of the present invention is a silane coupling agent. Examples of silane coupling agents include glycidoxypropyltrimetoxysilane, aminopropyltriethoxysilane, mercaptopropyltrimetoxysilane, mercaptopropylmethyldimethoxysilane and bis(3-triethoxysilylpropyl)tetrasulfide.

With regard to silane coupling agents, aminopropyltriethoxysilane is particularly preferable.

Silane coupling agents may be used singly in one kind or together in two kinds or more.

A method for producing a granular platy titanate of the present invention is characterized in that platy titanate is formed into granules with a silane coupling agent.

The producing method for granular platy titanate of the present invention may be performed by mixing a platy titanate with a solution obtained by dissolving or dispersing a predetermined amount of the above-mentioned silane coupling agent in water or appropriate organic solvent to granulate and dry in accordance with ordinary methods. Mixture ratio is not particularly limited but prefers to be properly selected in accordance with properties and uses of granules to be obtained; yet the silane coupling agent prefers to be typically approximately 0.01 to 50 parts by weight, preferably approximately 0.1 to 5 parts by weight, with respect to 100 parts by weight of platy titanate. A granulating method is not particularly limited but examples thereof include stirring granulation method, fluidized-bed granulation method, injection granulation method and oscillating granulation method; stirring granulation method is preferable. Shapes and sizes of granules to be obtained are not particularly limited but can optionally be determined. For example, sieving allows optional sizes.

Granular platy titanate to be obtained is added to various kinds of resin in accordance with uses thereof, and can be made into a molded product in accordance with ordinary molding methods such as injection molding, extrusion molding, calender molding, coating molding and press molding.

A resin composition of the present invention is characterized in that granular platy titanate of the above-mentioned present invention is contained in resin.

Examples of resin usable in a resin composition containing granular platy titanate of the present invention are not particularly limited but any of known resin can be used. Examples thereof include polyether imide, polyether sulfone, polyphenylene ether, polyether ketone resins (such as polyketone, polyether ketone, polyether ether ketone, polyether ketone ketone and polyether ether ketone), polycarbonate, polyolefin, polyester, polyacetal, thermoplastic polyurethane, polyamide, polyacrylate, polyvinyl chloride, polystyrene, polyvinylidene fluoride, polyvinylidene chloride, polyphenyl sulfone, polysulfone, liquid crystal polymer, thermoplastic polyimide, polyarylate, polyether nitrile and thermoplastic elastomer.

Polyphenylene sulfide used in the present invention is a polymer having a constitutional unit represented by the formula (1) as the main chain.

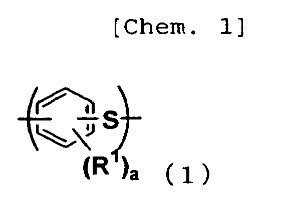

(In the formula, R¹ is alkyl group with a carbon number of 6 or less, alkoxyl group, phenyl group, carboxyl group or metallic salt thereof, amino group, nitro group and substituent selected from halogen atoms such as fluorine, chlorine and bromine, and a is an integer of 0 to 4.)
A copolymer in addition to a homopolymer can also be used. Examples of a constitutional unit of the copolymer include meta-phenylene sulfide unit, ortho-phenylene sulfide unit, para,para'-diphenylene ketone sulfide unit, para,para'-diphenylene sulfone sulfide unit, para,para'-biphenylene sulfide unit, para,para'-diphenylene methylene sulfide unit, para, para'-diphenylene cumenyl sulfide unit and naphthyl sulfide unit.

A molecular structure thereof may be any of linear structure, branch structure and crosslinked structure, and yet linear type and/or semilinear type are preferable.

Examples of polyamide include aliphatic nylon such as 4-nylon, 6-nylon, 6,6-nylon, 4,6-nylon, 6,10-nylon, 6,12-nylon, 11-nylon and 6,10-nylon, and aromatic nylon such as MXD6-nylon.

Examples of polyester include polyethylene terephthalate, polybutylene terephthalate, polytetramethylene terephthalate, polyethylene naphthalate and polytetramethylene naphthalate.

Examples of polycarbonate include aromatic polycarbonates such as bisphenol A polycarbonate.

Examples of polyphenylene ether include a polymer having a constitutional unit represented by the formula (2) as the main chain.

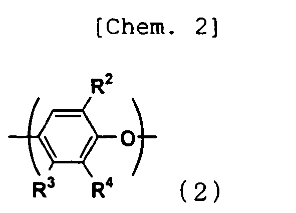

(In the formula, R⁴ is lower alkyl group with a carbon number of 1 to 3, and R² and R³ are hydrogen atom or lower alkyl group with a carbon number of 1 to 3.)
Examples thereof also include a copolymer in addition to a homopolymer; poly(2,6-dimethyl-1,4-phenylene)ether, poly(2,6-diethyl-1,4-phenylene)ether, poly(2,6-dipropyl-1,4-phenylene)ether and poly(2-methyl-6-propyl-1,4-phenylene)ether.

Examples of polystyrene include a styrene polymer and a polymer having styrene as the main component; general-purpose polystyrene, high-impact polystyrene, acrylonitrile-styrene (AS) resin and acrylonitrile-butadiene-styrene (ABS) resin.

Examples of polyolefin include polyolefins or oligomers such as polyethylene, polypropylene, copolymer of ethylene and α-olefin, copolymer of propylene and α-olefin, polybutene and poly-4-methylpentene-1, or modified polyolefin provided with polarity, such as maleic acid.

Examples of thermoplastic elastomer include polystyrene thermoplastic elastomer, polyolefin thermoplastic elastomer, polyurethane thermoplastic elastomer and polyamide thermoplastic elastomer.

The content of granular platy titanate prefers to be properly selected in accordance with intended physical properties; for example, the content of granular platy titanate prefers to be 1 to 100 parts by weight with respect to 100 parts by weight of a resin composition.

A melt-kneading method is not particularly limited but mechanical shearing prefers to be performed under a state of polymer melting. A specific kneading device is preferably an extruder, particularly a twin-screw extruder. A vent port is preferably provided for the purpose of removing moisture and low-molecular-weight volatile component caused during melt-kneading.

In the case of using a twin-screw extruder, the following methods are conceived but not particularly limited: two kinds or more of thermoplastic polymers to be used are previously mixed by a blender and supplied from a feed port on the upstream side of the extruder to project the granular platy titanate from a feed port on the downstream side thereof; or all polymers to be blended and the granular platy titanate are previously mixed by a blender and supplied from a feed port. The screw arrangement of the extruder is not particularly limited but a kneading zone is preferably provided in order that the polymers may be sufficiently dispersed to easily improve compatibility.

### (EFFECT OF THE INVENTION)

The present invention can provide granular platy titanate for improving production environment by reducing bridge and plugging during kneading, a producing method therefor and a resin composition containing the granular platy titanate.

The present invention is hereinafter described more specifically by examples and not limited thereto but can properly be modified in a range of not modifying the scope of the present invention.

### (Synthesis Example 1; synthesis of magnesium potassium titanate)

496.6 g of titanium oxide, 213.7 g of potassium carbonate and 89.4 g of magnesium hydroxide were mixed by an ordinary method, and the raw material mixture was filled into a vibrating mill (MB-1, manufactured by CHUO KAKOHKI CO., LTD.) and subjected to trituration treatment for 30 minutes on the conditions of a frequency of 1200 cpm and an amplitude of 6.0 mm. 48 mL of water was added to the trituration mixture and mixed, 15 g of which was molded into a pellet shape in a hydraulic pressing machine at a pressure of 10 MPa. These pellets were fired in an electric furnace at a temperature of 1000°C for 4 hours and thereafter cooled to grind the obtained fired product. The composition of the ground product was K₀.₈Mg₀.₄Ti₁.₆O₄. 1 L of 10 % by weight-aqueous slurry of this ground product was prepared, dispersed in a dispamill (manufactured by HOSOKAWA MICRON GROUP) for 15 minutes and subjected to suction filtration, and the cake batched off (solid content) was dried at a temperature of 110°C, fired in an electric furnace at a temperature of 600°C for 1 hour and thereafter cooled to sift the obtained fired product through a sieve of 20 mesh and obtain magnesium potassium titanate having an average major axis of 4µm and a composition of K_{0.6}Mg_{0.4}Ti_{1.6}O_{3.9}.

### (Synthesis Example 2; synthesis of lithium potassium titanate)

542.0 g of titanium oxide, 216.8 g of potassium carbonate and 41.2 g of lithium carbonate were mixed by an ordinary method to obtain lithium potassium titanate having an average major axis of 15µm and a composition of K₀.₆Li_{0.27}Ti_{1.73}O₃.₉ in the same method as Synthesis Example 1.

### (Synthesis Example 3; synthesis of platy potassium octatitanate)

154.6 g of lithium potassium titanate obtained in Synthesis Example 2 was dispersed in solution in which 1.57 kg of 70 %-sulfuric acid was dissolved in 29.4 L of water, to obtain 5 %-slurry. The slurry continued to be stirred by an agitating blade for approximately 5 hours, thereafter filtered, washed in water and dried to obtain platy titanic acid (H₂Ti₂O₅). The whole amount of the obtained platy titanic acid was dispersed in solution in which 0.74 kg of 85 %-potassium hydroxide was dissolved in 11.2 L of water, to obtain 10 %-slurry. The slurry continued to be stirred by an agitating blade for approximately 5 hours, thereafter filtered, washed in water and dried at a temperature of 110°C for 2 hours. Subsequently, this product was fired by an electric furnace at a temperature of 500°C for 3 hours to obtain platy potassium octatitanate having an average major axis of 16µm.

### (Synthesis Example 4; synthesis of composite platy calcium titanate)

Calcium carbonate and calcium chloride were ground by mixture at a blending ratio of 7:3 in molar ratio, and lithium potassium titanate obtained in Synthesis Example 2 was further blended therewith at a molar ratio of Ti:Ca = 1.11:1 to obtain a mixture, which was sufficiently mixed in a mixer. This mixture powder was filled into an alumina crucible and fired in an electric furnace at a temperature of 800°C for 5 hours. The obtained fired product was immersed in 0.1 N-nitric acid aqueous solution, and the soluble component was dissolved therein, thereafter separated by filtering off and dried to obtain composite platy calcium titanate having an average major axis of 14µm and a composition ratio of Ti:Ca = 1.12:1, such that 89 % of crystalline CaTiO₃ and 11 % of noncrystalline TiO₂ were compositely integrated.

### (Example 1)

10 %-aminopropyltriethoxysilane aqueous solution was dripped into the magnesium potassium titanate obtained in Synthesis Example 1 by 30 % by weight with respect thereto, and stirred for 5 minutes while stirring the magnesium potassium titanate with a Henschel mixer. The obtained granular particles were dried with a ventilation drier at a temperature of 110°C for one night, and sifted through a sieve of 850µm aperture to obtain granular platy titanate A as the passed particles. Sieves of 250µm, 150µm and 75µm from the top were superposed, through which sieves the granular platy titanate A was sifted to measure residues on each of the sieves; then, 34 wt % on the sieve of 250µm, 32 wt % on the sieve of 150µm, 33 wt % on the sieve of 75µm and 1 wt % through the sieve of 75µm were present, respectively.

### (Examples 2 to 10)

Various kinds of the platy titanates obtained in Synthesis Examples 1 to 4 were mixed singly or at predetermined compounding ratios (% by weight) as shown in Table 1 to obtain granular platy titanates B to J by the same method as Example 1. The granular platy titanates B to J together with the granular platy titanate A are shown in Table 1.

**[Table 1]**

| Ex. | Granular Platy Titanates | Magnesium Potassium Titanate | Lithium Potassium Titanate | Platy Potassium Octatitanate | Platy Composite Calcium Titanate |
|---|---|---|---|---|---|
| 1 | A | 100 | - | - | - |
| 2 | B | - | 100 | - | - |
| 3 | C | - | - | 100 | - |
| 4 | D | - | - | - | 100 |
| 5 | E | 50 | 50 | - | - |
| 6 | F | 50 | - | 50 | - |
| 7 | G | 50 | - | - | 50 |
| 8 | H | - | 50 | 50 | - |
| 9 | I | - | 50 | - | 50 |
| 10 | J | - | - | 50 | 50 |

### (Examples 11 to 20)

30 % by weight of each of the granular platy titanates A to J obtained in Examples 1 to 10 and 70 % by weight of PPS resin (Torelina L2120-60; manufactured by TORAY INDUSTRIES, INC.) were blender-mixed and supplied to a twin-screw extruder (TEX44, manufactured by THE JAPAN STEEL WORKS, LTD.) to evaluate feed situations to the extruder (adhesion and plugging in a hopper) and environmental hygiene by the following methods. The evaluation results are shown in Table 4.

### (Feed situations)

The feed situations were visually evaluated by the following four grades shown in Table 2.

**[Table 2]**

| Adhesion and Plugging in a Hopper | Evaluations |
|---|---|
| None | 4 |
| Small | 3 |
| Medium | 2 |
| Large | 1 |

### (Environmental hygiene)

Dust concentration around the extruder was measured by a high volume air sampler HVS-500-5 type (SIBATA SCIENTIFIC TECHNOLOGY LTD.) to evaluate by the following four grades shown in Table 3.

**[Table 3]**

| Dust Concentration (mg/m³) | Evaluations |
|---|---|
| 0.05 or Less | 4 |
| 0. 05-0.1 | 3 |
| 0.1-0.3 | 2 |
| 0.3 or More | 1 |

**[Table 4]**

| Ex. | Granular Platy Titanates | Feed Situations | Dust Concentration |
|---|---|---|---|
| 11 | A | 4 | 4 |
| 12 | B | 4 | 4 |
| 13 | C | 4 | 4 |
| 14 | D | 4 | 4 |
| 15 | E | 4 | 4 |
| 16 | F | 4 | 4 |
| 17 | G | 4 | 4 |
| 18 | H | 4 | 4 |
| 19 | I | 4 | 4 |
| 20 | J | 4 | 4 |

### (Comparative Examples 1 to 4)

The same evaluations as Examples 11 to 20 were performed using various kinds of the platy titanates of Synthesis Examples 1 to 4. The results are shown in Table 5.

**[Table 5]**

| Comp. Ex. | Platy Titanates | Feed Situations | Dust Concentration |
|---|---|---|---|
| 1 | Magnesium Potassium Titanate | 1 | 1 |
| 2 | Lithium Potassium Titanate | 1 | 1 |
| 3 | Platy Potassium Octatitanate | 1 | 1 |
| 4 | Platy Composite Calcium Titanate | 1 | 1 |

As clarified from Tables 4 and 5, the granular platy titanates had feed situations and environmental hygiene more improved than the platy titanates.

## Claims

1. A granular platy titanate consisting of a platy titanate and a silane coupling agent.

2. The granular platy titanate according to Claim 1, wherein the platy titanate is at least one selected from the group consisting of laminar titanate compounds, platy potassium octatitanates and platy composite metal titanates.

3. The granular platy titanate according to Claim 2, wherein the laminar titanate compound is a laminar titanate compound (B) obtained by acid treating and thereafter firing a laminar titanate compound (A).

4. The granular platy titanate according to Claim 3, wherein the laminar titanate compound (A) is a laminar titanate compound represented by the formula (1).
AₓM_{y}□OTi₂-_{(y+z)}O₄ (1)
wherein, A and M each denote different metals of monovalence to trivalence, and □ denotes a defect cite of Ti and wherein x is a positive real number satisfying 0<x<1.0, y and z are each 0 or positive real numbers satisfying 0<y+z<1.0.

5. The granular platy titanate according to Claim 4, wherein the laminar titanate compound (A) is a laminar titanate compound represented by K_{0.80}Li_{0.27}Ti_{1.73}O₄ or K_{0.8}Mg_{0.4}Ti_{1.6}O₄.

6. The granular platy titanate according to Claim 5, wherein the laminar titanate compound (B) is a laminar titanate compound represented by K_{0.5 to 0.7}Li_{0.27}Ti_{1.73}O_{3.85} to ₃.₉₅ or K_{0.2} to _{0.7}Mg_{0.4}Ti_{1.6}O_{3.7 to 4}.

7. The granular platy titanate according to Claim 2, wherein the platy composite metal titanate is platy composite metal titanate represented by MO·TiO₂ in which M denotes a divalent metal.

8. A method for producing a granular platy titanate, **characterized in that** a platy titanate is formed into granules with a silane coupling agent.

9. A resin composition containing 1 to 100 parts by weight of the granular platy titanate according to any one of Claims 1 to 7 with respect to 100 parts by weight of a resin.

## Patentansprüche

1. Granulatförmiges plättchenförmiges Titanat, bestehend aus einem plättchenförmigen Titanat und einem Silan-Kupplungsmittel.

2. Granulatförmiges plättchenförmiges Titanat nach Anspruch 1, wobei das plättchenförmige Titanat mindestens eines ist, gewählt aus der Gruppe, bestehend aus laminaren Titanatverbindungen, plättchenförmigen Kaliumoctatitanaten und plättchenförmigen Verbundmetalltitanaten.

3. Granulatförmiges plättchenförmiges Titanat nach Anspruch 2, wobei die laminare Titanatverbindung eine laminare Titanatverbindung (B) ist, erhalten durch Säurebehandlung und danach Brennen einer laminaren Titanatverbindung (A).

4. Granulatförmiges plättchenförmiges Titanat nach Anspruch 3, wobei die laminare Titanatverbindung (A) eine durch die Formel (1) wiedergegebene laminare Titanatverbindung ist
AₓM_{y}□Ti_{2-(y+z})O₄ (1)
worin A und M jeweils verschiedene Metalle von einwertig bis dreiwertig sind, und □ eine Defektstelle von Ti bedeutet, und worin x eine positive reale Zahl ist, welche 0<x<1,0 genügt, y und z jeweils 0 oder positive reale Zahlen sind, welche 0<y+z<1,0 genügen.

5. Granulatförmiges plättchenförmiges Titanat nach Anspruch 4, wobei die laminare Titanatverbindung (A) eine durch K_{0,80}Li_{0,27}Ti_{1,73}O₄ oder K_{0,8}Mg_{0,4}Ti_{1,6}O₄ wiedergegebene Titanatverbindung ist.

6. Granulatförmiges plättchenförmiges Titanat nach Anspruch 5, wobei die laminare Titanatverbindung (B) eine durch K_{0,5} bis _{0,7}Li_{0,27}Ti_{1,73}O_{3,85 bis 3},₉₅ oder K_{0,2 bis 0,7}Mg_{0,4}Ti_{1,6}O_{3,7 bis 4} wiedergegebene laminare Titanatverbindung ist.

7. Granulatförmiges plättchenförmiges Titanat nach Anspruch 2, wobei das plättchenförmige Verbundmetalltitanat ein durch MO·TiO₂, worin M ein zweiwertiges Metall bedeutet, wiedergegebenes, plättchenförmiges Verbundmetalltitanat ist.

8. Verfahren zur Herstellung eines granulatförmigen plättchenförmigen Titanats, **dadurch gekennzeichnet, dass** ein plättchenförmiges Titanat mit einem Silan-Kupplungsmittel zu Granulaten geformt wird.

9. Harzzusammensetzung, enthaltend 1 bis 100 Gewichtsteile des granulatförmigen plättchenförmigen Titanats gemäß mindestens einem der Ansprüche 1 bis 7, bezogen auf 100 Gewichtsteile eines Harzes.

## Revendications

1. Titanate en plaquettes sous forme granulaire, constitué d'un titanate en plaquettes et d'un agent de couplage de type silane.

2. Titanate en plaquettes sous forme granulaire, conforme à la revendication 1, dans lequel le titanate en plaquettes est au moins un élément choisi dans l'ensemble formé par les titanates lamellaires, les octatitanates de potassium en plaquettes et les titanates composites de métaux en plaquettes.

3. Titanate en plaquettes sous forme granulaire, conforme à la revendication 2, dans lequel le titanate lamellaire est un titanate lamellaire (B), obtenu par traitement acide d'un titanate lamellaire (A), suivi d'une calcination.

4. Titanate en plaquettes sous forme granulaire, conforme à la revendication 3, pour lequel le titanate lamellaire (A) est un titanate lamellaire de formule (1) :
AₓM_{y}□Ti_{2-(y+z})O₄ (1)
dans laquelle A et M représentent chacun un métal différent, à l'état monovalent à trivalent, □ représente une lacune de titane, l'indice x est un nombre réel positif obéissant à l'inégalité 0 < x < 1,0, et les indices y et z représentent chacun un nombre réel positif ou nul, lesquels nombres obéissent à l'inégalité 0 < y + z < 1,0.

5. Titanate en plaquettes sous forme granulaire, conforme à la revendication 4, pour lequel le titanate lamellaire (A) est un titanate lamellaire de formule
K_{0,80}Li_{0,27}Ti_{1,73}O₄ ou K_{0,8}Mg_{0,4}Ti_{1,6}O₄.

6. Titanate en plaquettes sous forme granulaire, conforme à la revendication 5, dans lequel le titanate lamellaire (B) est un titanate lamellaire de formule
K_{0,5-0,7}Li_{0,27}Ti_{1,73}O_{3,85-3,95} ou K_{0,2-0},₇Mg_{0,4}Ti_{1,6}O₃,₇₋₄.

7. Titanate en plaquettes sous forme granulaire, conforme à la revendication 2, dans lequel le titanate de métaux composite en plaquettes est un titanate de métaux composite en plaquettes de formule MO·TiO₂ dans laquelle M représente un métal divalent.

8. Procédé de production d'un titanate en plaquettes sous forme granulaire, **caractérisé en ce qu'**on met sous forme de granules un titanate en plaquettes, à l'aide d'un agent de couplage de type silane.

9. Composition de résine, contenant 1 à 100 parties en poids d'un titanate en plaquettes sous forme granulaire, conforme à l'une des revendications 1 à 7, pour 100 parties en poids d'une résine.
